# FASCICULE DE BREVET EUROPEEN

(11) **EP 2 272 156 B1**
(45) Date de publication et mention de la délivrance du brevet: **20.04.2016**
(21) Numéro de dépôt: 09738329.3
(22) Date de dépôt: 09.04.2009
(51) Int. Cl.: H02K 21/20, H02K 21/12, H02K 21/22

(54) **MACHINE TOURNANTE A FLUX TRANSVERSE ET DISPOSITIF DE COMMUTATION EQUIPE D'UNE TELLE MACHINE**
TRANSVERSALFLUSSMASCHINE UND DAMIT AUSGESTATTETE SCHALTVORRICHTUNG
TRANSVERSE FLUX ROTARY MACHINE AND SWITCHING DEVICE EQUIPPED WITH SUCH A MACHINE

(30) Priorité: 28.04.2008 FR 0802379
(43) Date de publication de la demande: 12.01.2011
(73) Titulaire: Schneider Electric Industries SAS, 92500 Rueil-Malmaison (FR)
(72) Inventeur: CARTIER MILLON, Christophe, F-38400 Saint Martin d'Hères (FR); FROIDUROT, Benoît, F-38570 Gonceli (FR)
(74) Mandataire: Dufresne, Thierry
(86) Numéro de dépôt international: PCT/FR2009/000415
(87) Numéro de publication internationale: WO 2009/133295

(56) Documents cités:
- WO-A-02/09261
- DE-A1-102006 022 836
- US-B1- 6 492 758

## Description

### DOMAINE TECHNIQUE DE L'INVENTION

L'invention relève du domaine des machines tournantes à flux transverse pouvant être utilisées comme moteur ou générateur.

L'invention concerne, en particulier, une machine tournante à flux transverse comprenant deux pièces principales montées de façon sensiblement coaxiale autour d'un axe principal, lesdites pièces principales étant constituées essentiellement par un stator et par un rotor monté rotatif par rapport au stator,
- la première pièce principale comprenant au moins une bobine d'excitation, une pièce intermédiaire perméable magnétiquement et des griffes réparties le long de la circonférence de ladite pièce intermédiaire avec un pas de griffes constant et alternativement orientées dans un sens opposé, lesdites griffes formant une première surface d'entrefer, lesdites griffes étant disposées de manière à s'entrecroiser sur une partie de ladite bobine et de manière à former avec ladite pièce intermédiaire une pluralité de circuits magnétiques,
- la seconde pièce principale comprenant une partie d'aimantation permanente polarisée axialement et une seconde surface d'entrefer permettant de fermer les circuits magnétiques formés dans la première pièce principale.

### ÉTAT DE LA TECHNIQUE

La demande de brevet allemande DE 10 2006 022 836 décrit une machine tournante à flux transverse comportant un stator et un rotor montés de façon coaxiale et présentant des pôles en forme de griffes. Les pôles du rotor sont connectés entre eux pour former un corps de rotor annulaire renfermant un aimant polarisé dans la direction axiale.

Un problème technique de la machine à flux transverse décrite ci-dessus est que les variations dans le temps du flux magnétique dans chaque pôle ne sont pas optimisées.

### EXPOSÉ DE L'INVENTION

L'invention vise à remédier aux problèmes techniques des machines à flux transverse de l'art antérieur en proposant une machine tournante à flux transverse comprenant deux pièces principales montées de façon sensiblement coaxiale autour d'un axe principal, lesdites pièces principales étant constituées essentiellement par un stator et par un rotor monté rotatif par rapport au stator,
- la première pièce principale comprenant au moins une bobine d'excitation, une pièce intermédiaire perméable magnétiquement et des griffes réparties le long de la circonférence de ladite pièce intermédiaire avec un pas de griffes constant et alternativement orientées dans un sens opposé, lesdites griffes formant une première surface d'entrefer, lesdites griffes étant disposées de manière à former avec ladite pièce intermédiaire une pluralité de circuits magnétiques autour d'une partie de ladite bobine,
- la seconde pièce principale comprenant une seconde surface d'entrefer permettant de fermer lesdits circuits magnétiques formés dans la première pièce principale par l'entremise de la première surface d'entrefer, et une partie d'aimantation permanente présentant une polarisation dans un seul sens,

L'invention est caractérisé en ce que lesdites griffes sont disposées de manière à s'entrecroiser entre elles, la seconde pièce principale comportant des protubérances portant la seconde surface d'entrefer, lesdites protubérances étant solidaires de la dite partie d'aimantation permanente de façon à présenter des polarités opposées, lesdites protubérances de polarités opposées étant alternativement réparties le long de la circonférence de ladite seconde pièce principale avec un pas de protubérances sensiblement identique au pas de griffes.

De préférence, la première pièce principale est un stator et la seconde pièce principale est un rotor

Selon un mode de réalisation, la pièce intermédiaire comporte une partie cylindrique. Dans ce cas, les griffes orientées dans un sens donné peuvent être solidaires d'une pièce annulaire disposée sur un bord de la partie cylindrique de la pièce intermédiaire. De préférence, les griffes solidaires d'une même pièce annulaire sont logées à l'intérieur de la partie cylindrique. Alternativement, les griffes solidaires d'une même pièce annulaire sont à l'extérieur de la partie cylindrique.

Selon un mode de réalisation, la partie d'aimantation permanente est en une seule pièce. Avantageusement, la partie d'aimantation permanente est cylindrique.

Selon un mode de réalisation, la seconde pièce principale comporte deux pièces latérales, perméables magnétiquement, montées de façon sensiblement coaxiale par rapport à l'axe principal, lesdites pièces latérales étant solidaires de la partie d'aimantation permanente de façon à présenter des polarités opposées, les protubérances de même polarité étant disposées sur l'une ou l'autre pièces latérales et réparties le long de la circonférence desdites pièces latérales. Les pièces latérales peuvent être des pièces annulaires disposées sur la circonférence ou sur les bords de la partie d'aimantation permanente.

Selon un mode de réalisation, les protubérances sont des dents dont les faces d'extrémités forment la seconde surface d'entrefer. Alternativement les protubérances présentent une forme en « L » dont les branches d'extrémité sont orientées axialement.

Selon un mode de réalisation, la première pièce principale est disposée autour de la seconde pièce principale. Alternativement, la seconde pièce principale est disposée autour de la première pièce principale.

L'invention concerne également un dispositif de commutation comportant un organe de commande et une machine tournante utilisée comme générateur d'énergie, ladite machine tournante comportant un rotor, le dispositif étant caractérisé en ce que la machine tournante est telle que décrite précédemment, le rotor étant couplé mécaniquement à l'organe de commande.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 est une représentation schématique d'une portion de machine tournante selon l'invention dans laquelle les courbures des pièces de révolution ont été représentées de manière rectiligne.
La figure 2 est une vue en perspective d'une machine tournante selon un premier mode de réalisation de l'invention.
La figure 3 est une vue partielle en perspective du mode de réalisation représenté à la figure 2.
La figure 4 est une vue en coupe du mode de réalisation représenté à la figure 2.
La figure 5 est une vue partielle en perspective du stator du mode de réalisation représenté à la figure 2.
La figure 6 est une vue en perspective d'un circuit magnétique du mode de réalisation représenté à la figure 2.
La figure 7 est une vue en éclatée illustrant le montage du mode de réalisation représenté à la figure 2.
La figure 8 est une vue en perspective d'une machine tournante selon un second mode de réalisation de l'invention.
La figure 9 est une vue partielle en perspective du mode de réalisation représenté à la figure 8.
La figure 10 est une vue en coupe du mode de réalisation représenté à la figure 8.
La figure 11 est une vue partielle en perspective du stator du mode de réalisation représenté à la figure 8.
La figure 12 est une vue en éclatée illustrant le montage du mode de réalisation représenté à la figure 8.
La figure 13 est une vue en perspective d'une machine tournante selon un troisième mode de réalisation de l'invention.
La figure 14 est une vue de côté du mode de réalisation représenté à la figure 13.
La figure 15 est une vue partielle en perspective du mode de réalisation représenté à la figure 13.
La figure 16 est une vue en coupe du mode de réalisation représenté à la figure 13.
La figure 17 est une vue partielle en perspective du stator du mode de réalisation représenté à la figure 13.
La figure 18 est une vue en éclatée illustrant le montage du mode de réalisation représenté à la figure 13.
La figure 19 représente schématiquement un interrupteur comportant une machine tournante selon l'invention.

### DESCRIPTION DETAILLEE D'UN MODE DE RÉALISATION

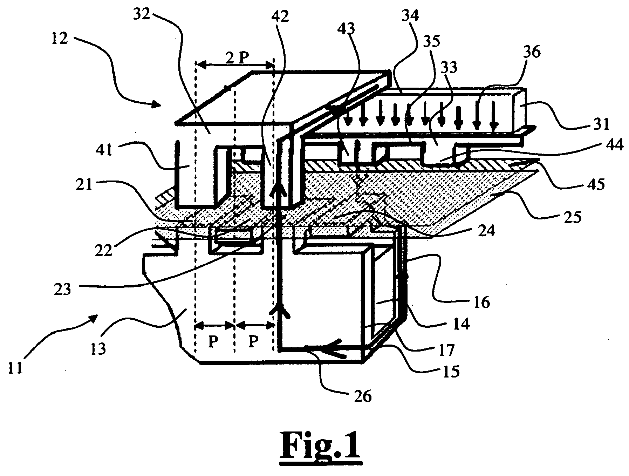

En référence à l'exemple illustratif représenté à la figure 1, la machine tournante à flux transverse comprend une première pièce principale 11 et une deuxième pièce principale 12, chacune de ces pièces pouvant être indifféremment le stator et le rotor. Ces pièces principales sont montées de façon coaxiale par rapport à un axe principal non visible sur la figure 1. Ces pièces principales ont été représentées partiellement pour mieux décrire le fonctionnement, de la machine tournante. Pour plus de clarté, les courbures de ces deux pièces principales ont été représentées de manière rectiligne. Ainsi les lignes horizontales de la figure 1 présentent, en réalité, une courbure suivant la circonférence des deux pièces principales. Dans cette représentation de la figure 1, cette circonférence est définie par rapport à un axe principal traversant le plan de ladite figure en un point situé au-dessous de ladite figure. En d'autres termes, les pièces principales sont représentées à la figure 1 comme si elles comportaient un rayon de courbure infini défini par rapport à un axe principal traversant le plan de la figure 1 en un point situé au-dessous de ladite figure.

La première pièce principale 11 représentée partiellement à la figure 1 comprend une pièce intermédiaire 13 en matériau ferromagnétique et une bobine d'excitation 14. La pièce intermédiaire 13 comporte une partie cylindrique 15 et des bords 16, 17. La bobine 14 est enroulée autour de la circonférence de la partie cylindrique. Notons que cette circonférence de la partie cylindrique est représentée sur la figure 1 de manière rectiligne, suivant les lignes horizontales. La première pièce principale 11 de la figure 1 comprend, en outre, des griffes 21-24 en matériau ferromagnétique réparties le long de la circonférence de la pièce intermédiaire 13 avec un pas de griffes P constant. Ces griffes sont alternativement orientées dans un sens opposé selon une direction axiale. Ainsi les griffes 21 et 23 sont orientées dans un sens opposé par rapport aux griffes 22 et 24. Ces griffes sont disposées de manière à s'entrecroiser sur une partie de la bobine d'excitation 14. Dans le cas représenté à la figure 1, les griffes sont réparties le long de la circonférence des bords 16, 17 de la pièce intermédiaire 13 et sont disposées alternativement sur l'un et l'autre desdits bords avec un pas de griffes P constant. Les griffes 21-24 présentent une forme en « L » et sont disposées de façon à former une première surface d'entrefer 25. Plus précisément, la surface d'entrefer 25 est formée par un flanc axial externe des griffes 21-24. Les griffes sont disposées de manière à former avec la pièce intermédiaire 13 une pluralité de circuits magnétiques. L'un de ces circuits magnétiques a été représenté par une ligne référencée 26. Dans la première pièce principale 11, le circuit magnétique 26 passe successivement par la griffe 24, le bord 16 de la pièce intermédiaire 13, la partie cylindrique 15 de ladite pièce intermédiaire, le bord 17 de ladite pièce intermédiaire et la griffe 23. Ce circuit magnétique 26 dans la première pièce principale est donc un circuit ouvert. Ce circuit est fermé par l'entremise de la seconde pièce principale 12 dans laquelle il se prolonge décrite ci-dessous.

La seconde pièce principale 12 représentée partiellement à la figure 1 comprend une partie d'aimantation permanente 31 unipolaire ou polarisée dans un seul sens et deux pièces latérales 32, 33 en matériau ferromagnétique montées de façon sensiblement coaxiale. Dans le cas représenté, la partie d'aimantation permanente 31 est polarisée radialement. Une partie d'aimantation polarisée dans un seul sens présente généralement deux pôles sur deux faces opposées. Une telle partie d'aimantation permanente peut quelquefois être qualifiée de partie d'aimantation unipolaire. Comme pour la première pièce principale, la partie d'aimantation permanente 31 et les deux pièces latérales 32, 33 présentent des courbures selon la circonférence représentées par les lignes horizontales. Les pièces latérales sont montées solidairement sur la partie d'aimantation permanente de façon à présenter des polarités de signe opposé. En fait, la partie d'aimantation permanente 31 comporte deux faces 34, 35 présentant une aimantation de signe opposé représentée par les flèches 36. Ces deux faces 34, 35 constituent ainsi les pôles de la partie aimantée. Afin d'obtenir des polarités de signe opposé sur les pièces latérales, ces dernières sont montées solidairement sur chaque pôle 34, 35 de la partie d'aimantation permanente 31. Les pièces latérales 32, 33 comportent des protubérances ou des dents 41-44 dont les faces d'extrémités forment une seconde surface d'entrefer 45. Ces protubérances sont réparties le long de la circonférence des pièces latérales et disposées alternativement sur l'une et l'autre desdites pièces latérales avec un pas de protubérances sensiblement identique au pas de griffes P. Dans le cas représenté à la figure 1, les protubérances sont orientées selon une direction radiale. La seconde surface d'entrefer 45 formée par les faces d'extrémité des protubérances 41-44 et la première surface d'entrefer 25 formée par les flancs externes des griffes 21-24 ont la forme de cylindres coaxiaux. Ces surfaces d'entrefer 25, 45 définissent un entrefer entre les deux pièces principales ayant une distance sensiblement constante. Le circuit magnétique 26, dans la seconde partie principale 12, se prolonge à travers la protubérance 42 de la pièce latérale 32, la partie d'aimantation permanente 31 et la protubérance 43 de la pièce latérale 33.

En d'autres termes, l'entrecroisement des griffes 21-24 est réalisé de façon à ce que chaque griffe soit en vis-à-vis avec une protubérance 41-44 à chaque rotation correspondant à un pas polaire, c'est-à-dire à chaque rotation correspondant au pas de griffes, lorsque le rotor est la première pièce principale, ou à chaque rotation correspondant à un pas de protubérances lorsque le rotor est la seconde pièce principale. L'alternance des polarités des protubérances permet d'obtenir une inversion de flux magnétique dans chaque circuit magnétique, à chaque pas polaire. Ainsi, la disposition des griffes et des protubérances sur les pièces principales 11, 12, notamment l'entrecroisement des griffes 21-24, permet d'obtenir une inversion du flux magnétique à chaque rotation correspondant à un pas polaire. Lorsque la machine tournante à flux transverse est utilisée comme un générateur, la quantité d'énergie électrique ainsi générée s'en trouve donc accrue.

Lorsqu'un courant parcourt la bobine d'excitation 14, un flux magnétique est généré par la première pièce principale dans chacun des circuits magnétiques. Les protubérances 41-44 polarisées magnétiquement par la partie d'aimantation permanente 31 de la seconde pièce principale 12 sont donc attirées ou repoussées par rapport aux griffes 21-24 de la première pièce principale 11. Par exemple, dans le cas du circuit magnétique 26 représenté à la figure 1, les protubérances 42, 43 de la seconde pièce principale 12 et les griffes 23, 24 de la première pièce principale 11 sont attirées mutuellement. Si on inverse le sens du courant d'excitation dans la bobine 14, les protubérances 42, 43 de la seconde pièce principale 12 et les griffes 23, 24 de la première pièce principale 11 se repoussent mutuellement. De cette façon, en inversant successivement le sens du courant dans la bobine d'excitation, la partie principale de la machine tournante constituant le rotor est entrainé en rotation par rapport à l'autre partie principale constituant le stator.

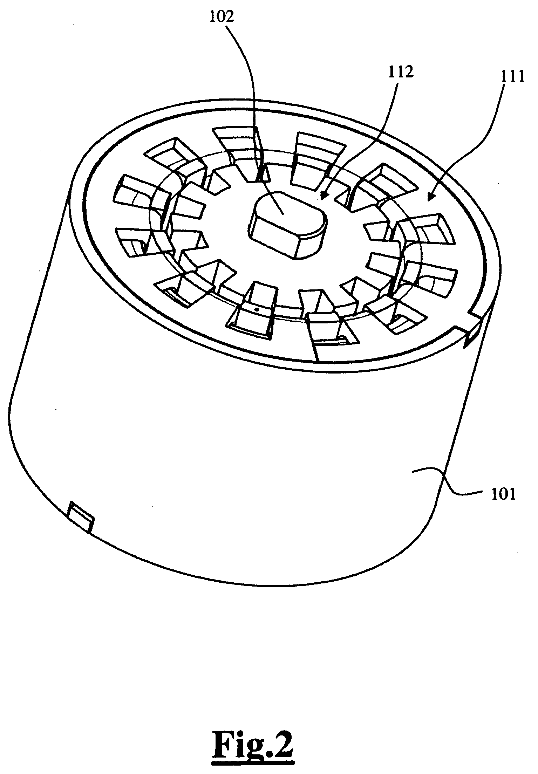

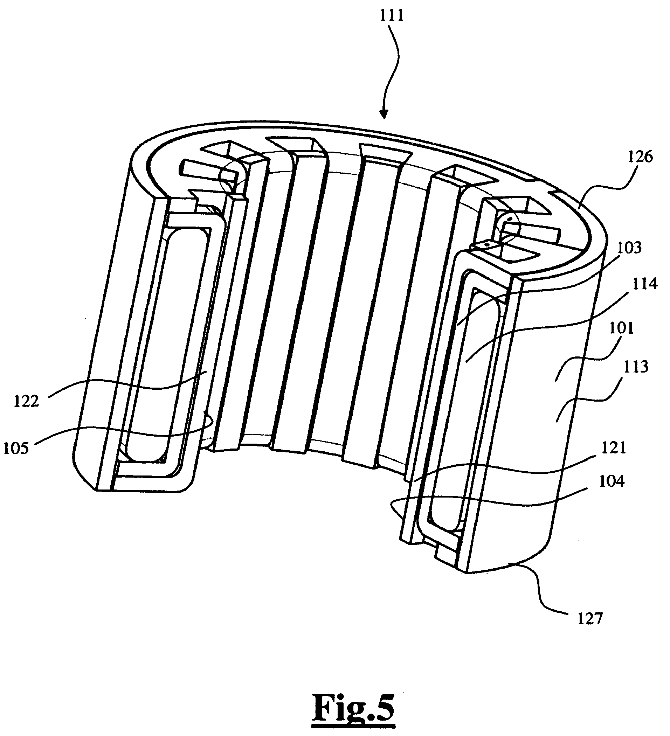

Dans le premier mode de réalisation représenté sur les figures 2 à 7, la première pièce principale 111 est statique et constitue donc le stator, alors que la seconde pièce principale 112 est mobile et constitue donc le rotor. De plus, le stator 111 est dans ce premier mode de réalisation disposé autour du rotor 112. Comme cela est visible sur la figure 2, le stator 111 comporte une enveloppe cylindrique 101. Le stator 111 et le rotor 112 sont montés de façon coaxiale autour d'un axe principal représentée par l'axe d'entrainement 102 du rotor.

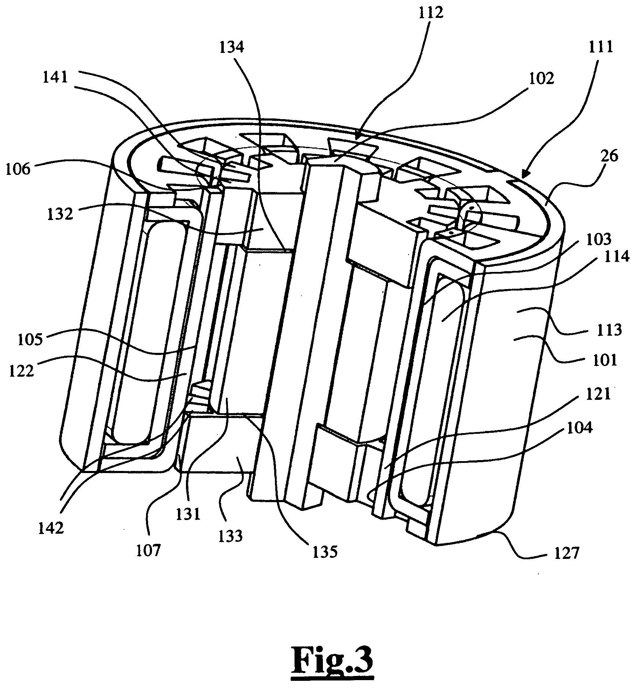

Comme cela est visible sur les figures 3, 4 et 5, le stator 111 comprend une pièce intermédiaire 113 en matériau ferromagnétique qui est essentiellement formée par l'enveloppe cylindrique 101. Le stator 111 comprend également une bobine d'excitation 114 montée sur un support de bobine 103. Le stator 111 comprend, en outre, des griffes 121, 122 en matériau ferromagnétique réparties le long de la circonférence de la pièce intermédiaire 113 de manière à s'entrecroiser sur une partie de la bobine d'excitation 114. Plus précisément, les griffes 121, 122 sont réparties le long de la circonférence de pièces annulaires référencées respectivement 161 et 162. Ces pièces annulaires 161, 162 sont montées solidairement sur la circonférence intérieure de la pièce intermédiaire à proximité respectivement du bord supérieur 126 et du bord inférieur 127 de la pièce intermédiaire 113. Les griffes 121, 122 sont réparties alternativement le long de la circonférence de l'une et l'autre des pièces annulaires avec un pas de griffes constant et sont orientées alternativement dans un sens opposé selon une direction axiale. Ainsi les griffes 121 réparties le long de la circonférence à proximité du bord supérieur 126 sont orientées vers le bas, alors que les griffes 122 réparties le long de la circonférence à proximité du bord inférieur 127 sont orientées vers le haut. Dans ce premier mode de réalisation, les griffes 121, 122 présentent une forme en « L ». Une première surface d'entrefer 125 du stator 111 présentant une forme sensiblement cylindrique est formée par le flanc axial externe 104, 105 des griffes 121, 122.

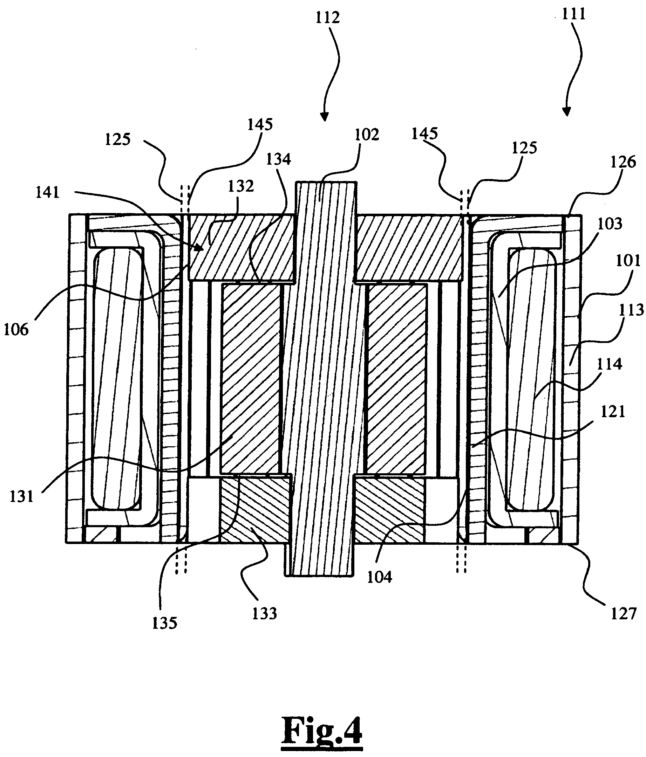

Le rotor 112 visible sur les figures 3 et 4 comprend un aimant permanent 131 polarisé dans un seul sens, une pièce latérale supérieure 132 et une pièce latérale inférieure 133 montés de façon sensiblement coaxiale par rapport à l'axe d'entrainement 102 du rotor. L'aimant permanent 131 présente une symétrie de révolution par rapport à l'axe d'entrainement 102 et est monté fixement autour de cet axe. Plus précisément, l'aimant permanent 131 présente une forme cylindrique et comporte deux faces 134, 135 présentant une aimantation de signe opposé et constituant les pôles dudit aimant. Dans le cas représenté, la partie d'aimantation permanente 31 est polarisée axialement. Les deux pièces latérales 132, 133 sont, quant à elles, fabriquées dans un matériau ferromagnétique. Les deux pièces latérales 132, 133 sont montées solidairement sur les faces 134, 135 de l'aimant. Ainsi, les pièces latérales 132, 133 perméables magnétiquement présentent des polarités de signe opposé. Les pièces latérales 132, 133 présentent également une symétrie de révolution par rapport à l'axe d'entrainement 102. Les protubérances ou les dents 141, 142 sont réparties le long de la circonférence des pièces latérales et sont disposées alternativement sur l'une et l'autre desdites pièces latérales avec un pas de protubérances sensiblement identique au pas de griffes. Les faces d'extrémités 106, 107 des protubérances 141, 142 forment une seconde surface d'entrefer. Les faces d'extrémités 106, 107 et les faces des flancs axiaux externes 104, 105 formant les surfaces d'entrefer peuvent être planes. Avantageusement, elles peuvent être légèrement incurvées selon une courbure suivant la circonférence du stator et du rotor, afin de minimiser toute variation de la distance d'entrefer.

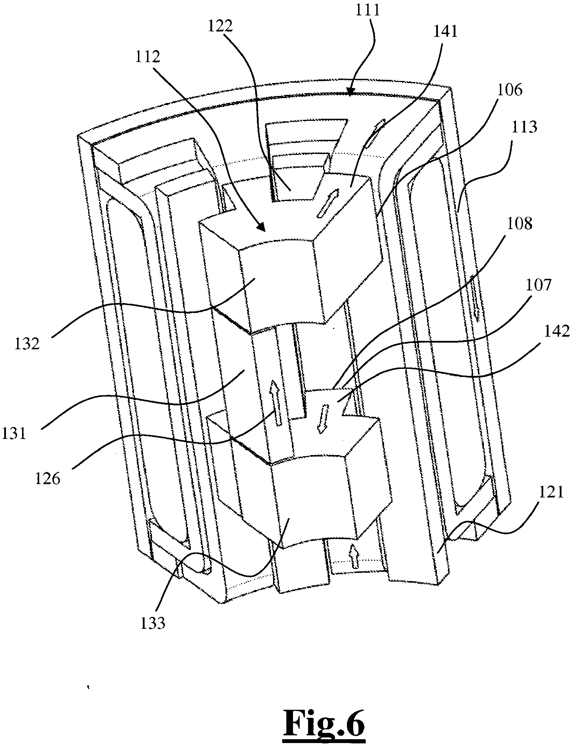

Comme cela est visible sur la figure 6, les griffes 121, 122 du stator 111 sont disposées de manière à former avec la pièce intermédiaire 113 une pluralité de circuits magnétiques. Le circuit magnétique représenté par la ligne référencée 126 passe successivement par la griffe 121, la pièce intermédiaire 113, la griffe 122, un premier entrefer 108, la protubérance 142 de la pièce latérale 133, l'aimant permanent 131 et la protubérance 141 de la pièce latérale 132.

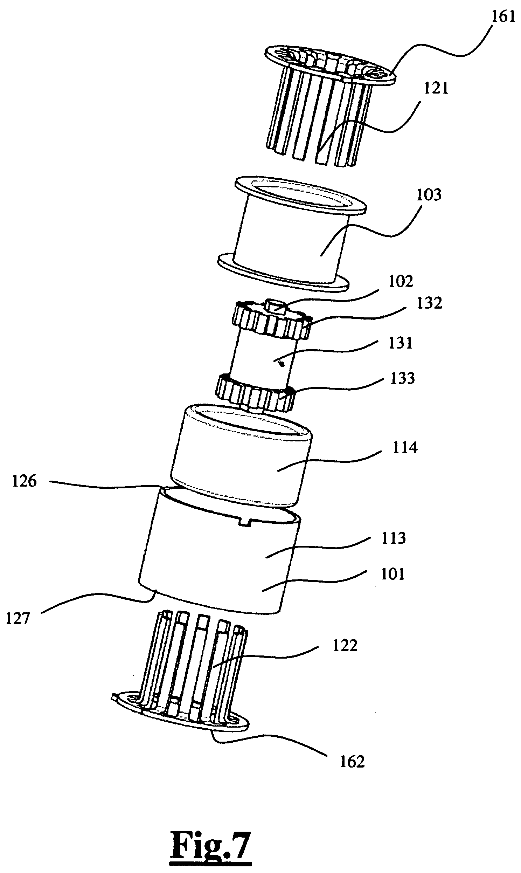

Comme cela est visible sur la figure 7, la pièce intermédiaire 113 du stator 111 comporte une partie cylindrique creuse qui est essentiellement formée par l'enveloppe 101 dudit stator. Les griffes 121 orientées vers le bas sont solidaires de la pièce annulaire 161 et les griffes 122 orientées vers le haut sont solidaires de l'autre pièce annulaire 162. Lors de l'assemblage d'une machine tournante selon le premier mode de réalisation, les pièces annulaires support de griffes 161, 162 viennent s'appuyer sur les bords 126, 127 de la pièce intermédiaire 113. Ce type de disposition dans laquelle les griffes orientées dans un même sens sont solidaire d'une même pièce annulaire permet de faciliter l'assemblage de la machine tournante. Dans ce premier mode de réalisation, les griffes 121, 122 solidaires d'une même pièce annulaire 161, 162 sont logées à l'intérieur de la partie cylindrique de la pièce intermédiaire 113. Lors de l'assemblage de la machine tournante, la bobine d'excitation 114 et le support de bobine 103 sont ainsi insérés entre les griffes 121, 122 et la pièce intermédiaire 113 pour former le stator 111. Le rotor 112, équipé de l'aimant 131, des parties latérales 132, 133 et de l'axe d'entrainement 102, est ensuite inséré dans le stator 111 et monté de façon coaxiale par rapport à celui-ci.

Le dispositif de ce premier mode de réalisation est compact et efficace. Totalement réversible, il peut être utilisé comme un moteur, tel qu'un moteur d'essuie glace, ou comme générateur d'énergie pour un dispositif autonome, tel qu'un interrupteur sans fils de type rotatif ou à bascule. La source potentielle d'énergie représentée par l'aimant 131 se trouve au centre du dispositif, de sorte que toutes les fuites magnétiques sont récupérées par les pièces ferromagnétiques 161, 132, 133, 162, 122, 121 et contribuent à la génération d'énergie.

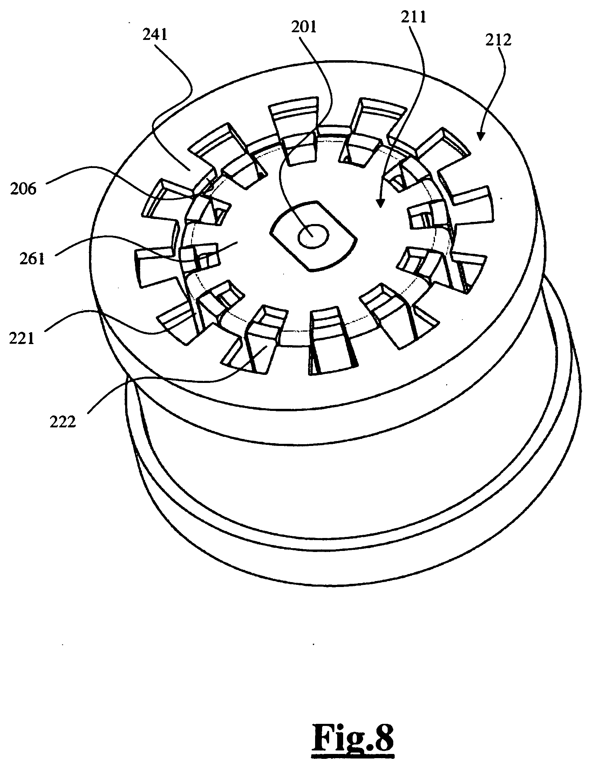

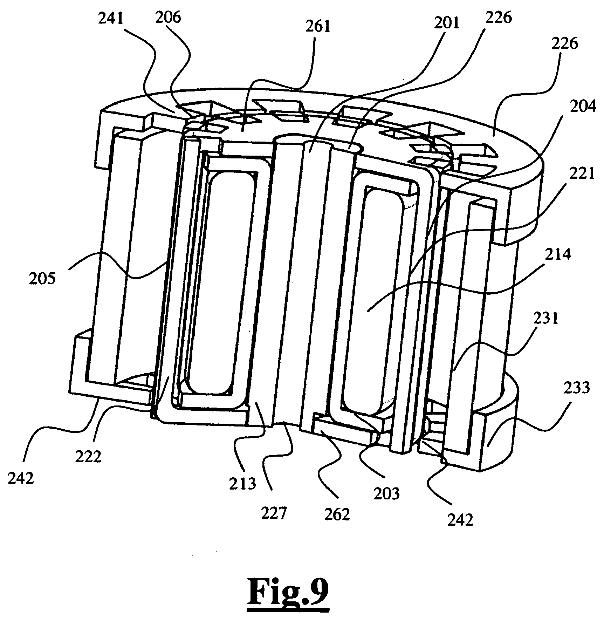

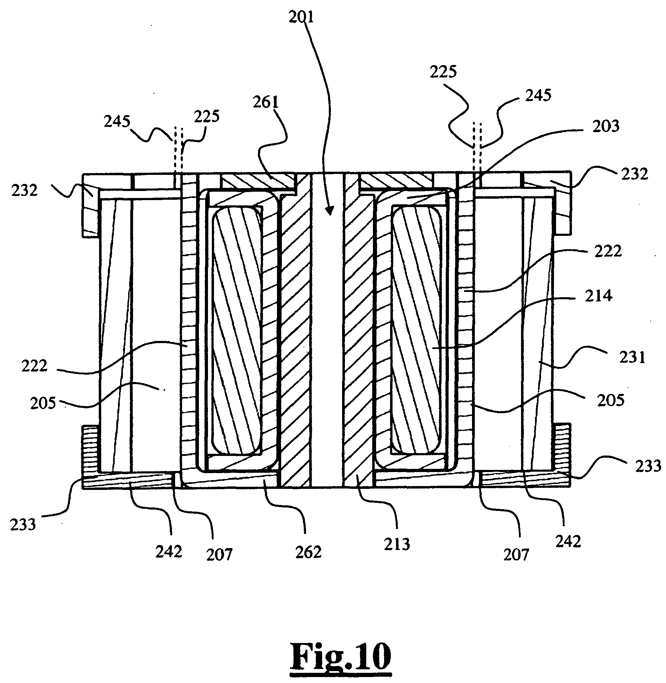

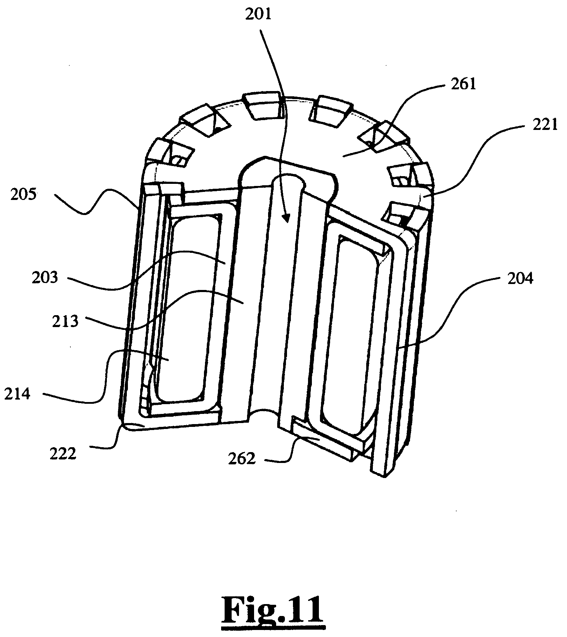

Dans le second mode de réalisation représenté sur les figures 8 à 12, la première pièce principale 211 est statique et constitue donc le stator, alors que la seconde pièce principale 212 est mobile et constitue donc le rotor. Contrairement au premier mode de réalisation, le rotor 212 est disposé autour du stator 211. Le stator 211 et le rotor 212 sont montés de façon coaxiale autour d'un axe principal représentée par l'axe fixe 201 du stator.

Comme cela est visible sur les figures 8, 9, 10 et 11, le stator 211 comprend une pièce intermédiaire 213 en matériau ferromagnétique qui est essentiellement formée par l'axe principal 201. Cette pièce intermédiaire 213 comprend une partie cylindrique présentant une symétrie de révolution définie par rapport à l'axe fixe 201. Le stator 211 comprend également une bobine d'excitation 214 montée sur un support de bobine 203. Le stator 211 comprend des griffes 221, 222 en matériau ferromagnétique fixées solidairement à la pièce intermédiaire 213. Les griffes 221 orientées vers le bas sont solidaires d'une pièce annulaire 261 qui est elle-même fixée solidairement sur la circonférence à proximité du bord supérieur 226 de la pièce intermédiaire 213. Les griffes orientées 222 vers le haut sont solidaires d'une pièce annulaire 262 qui est elle-même fixée solidairement sur la circonférence à proximité du bord inférieur 227 de la pièce intermédiaire 213. Les griffes 221, 222 sont réparties le long de la circonférence respectivement des pièces annulaires 261, 262 de manière à s'entrecroiser sur une partie de la bobine d'excitation 214. Plus précisément, les griffes 221, 222 sont réparties le long de la circonférence des pièces annulaires en étant disposées alternativement sur l'une et l'autre des pièces annulaires 261, 262 avec un pas de griffes constant. Ces griffes 221, 222 sont également alternativement orientées dans un sens opposé selon une direction axiale. Ainsi les griffes 221 réparties le long de la circonférence de la pièce annulaire 261 sont orientées vers le bas, alors que les griffes 222 réparties le long de la circonférence de la pièce annulaire 262 sont orientées vers le haut. Les griffes 221, 222 présentent une forme en « L ». Une première surface d'entrefer 225 du stator 211 présentant une forme sensiblement cylindrique est formée par le flanc axial externe 204, 205 des griffes 221, 222.

Le rotor 212 visible sur les figures 8, 9 et 10 comprend un aimant permanent 231 polarisé dans un seul sens, une pièce latérale supérieure 232 et une pièce latérale inférieure 233 montés de façon sensiblement coaxiale par rapport à l'axe fixe 201. L'aimant permanent 231 présente une symétrie de révolution par rapport à cet axe fixe. Plus précisément, l'aimant permanent 231 présente une forme cylindrique et est aimanté selon une direction axiale. Les deux pièces latérales 232, 233 sont fabriquées dans un matériau ferromagnétique et sont fixées solidairement à l'aimant de manière à présenter des polarités de signe opposé. Plus précisément, les deux pièces latérales 232, 233 sont montées solidairement sur les bords de l'aimant. Les pièces latérales 232, 233 présentent également une symétrie de révolution par rapport à l'axe principal 201. Les protubérances ou les dents 241, 242 sont réparties le long de la circonférence intérieure des pièces latérales et disposées alternativement sur l'une et l'autre desdites pièces latérales avec un pas de protubérances sensiblement identique au pas de griffes. Les faces d'extrémités 206, 207 des protubérances 241, 242 forment une seconde surface d'entrefer 245 cylindrique. Les faces d'extrémités 206, 207 des protubérances 241, 242 et les faces des flancs axiaux externes 204, 205 des griffes 221, 222 formant les surfaces d'entrefer 225, 245 peuvent être planes. Avantageusement, elles peuvent être légèrement incurvées selon une courbure suivant la circonférence du stator et du rotor, afin de minimiser toute variation de la distance d'entrefer.

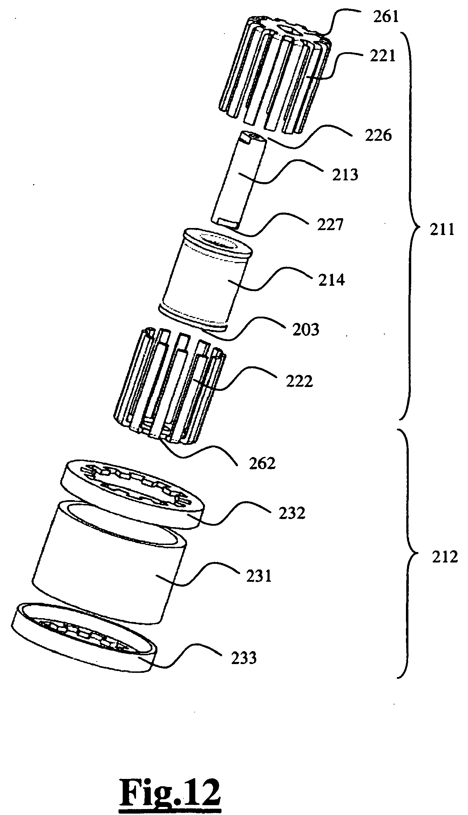

Comme cela est visible sur la figure 12, la pièce intermédiaire 213 du stator 211 comporte une partie cylindrique. Les griffes 221 orientées vers le bas sont solidaires de la pièce annulaire 261 et les griffes 222 orientés vers le haut sont solidaires de l'autre pièce annulaire 262. Lors de l'assemblage d'une machine tournante selon le second mode de réalisation, les pièces annulaires support de griffes 261, 262 viennent s'appuyer sur des épaulements aux extrémités de la partie cylindrique de la pièce intermédiaire 213. Ce type de disposition dans laquelle les griffes orientées dans un même sens sont disposées sur une même pièce annulaire permet de faciliter l'assemblage de la machine tournante. Contrairement au premier mode de réalisation, les griffes 221, 222 solidaires d'une même pièce annulaire 261, 262 sont logées à l'extérieur de la partie cylindrique de la pièce intermédiaire 213. Lors de l'assemblage de la machine tournante, la bobine d'excitation 214 et le support de bobine 203 sont enfilés sur la pièce intermédiaire 213 pour être disposés entre les griffes 221, 222 et ladite pièce intermédiaire 213. Cette première partie de l'assemblage permet de former le stator 211. Les éléments du rotor 212, c'est à dire l'aimant 231 et les parties latérales 232, 233, sont assemblés pour être montés autour du stator 211 de façon coaxiale.

Le dispositif selon ce deuxième mode de réalisation est totalement réversible, et peut être utilisé comme moteur, tel qu'un moteur d'essuie glace, ou comme générateur d'énergie pour dispositif autonome, tel qu'un interrupteur sans fils, rotatif ou à bascule. La source potentielle d'énergie représentée par l'aimant 214 se trouve à la périphérie du dispositif, de sorte que les vitesses de rotations nécessaires à la génération d'énergie sont réduites. Ainsi, le dispositif peut être couplé avec un système à plus faible vitesse que le dispositif selon le premier mode de réalisation. Dans ce mode de réalisation avec un aimant sur le pourtour, le volume d'aimant est ici plus important que dans le premier mode de réalisation, et l'énergie potentielle s'en trouve augmentée.

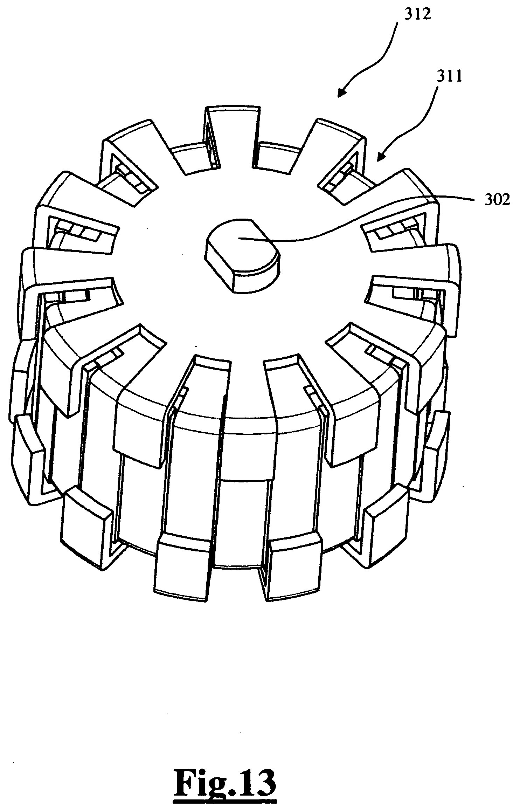

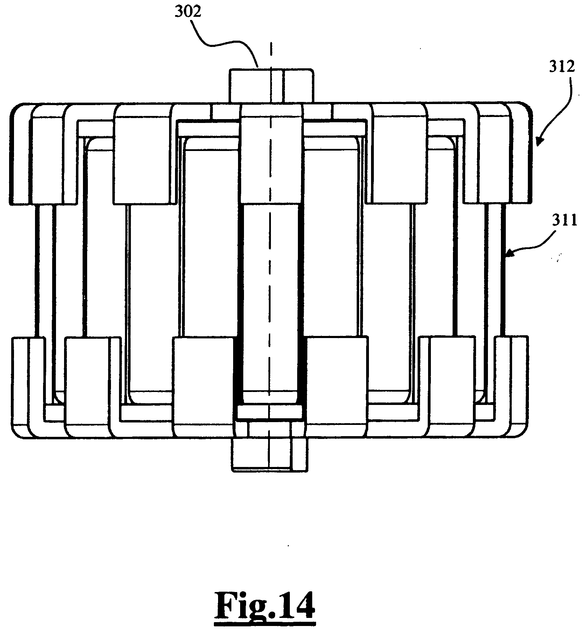

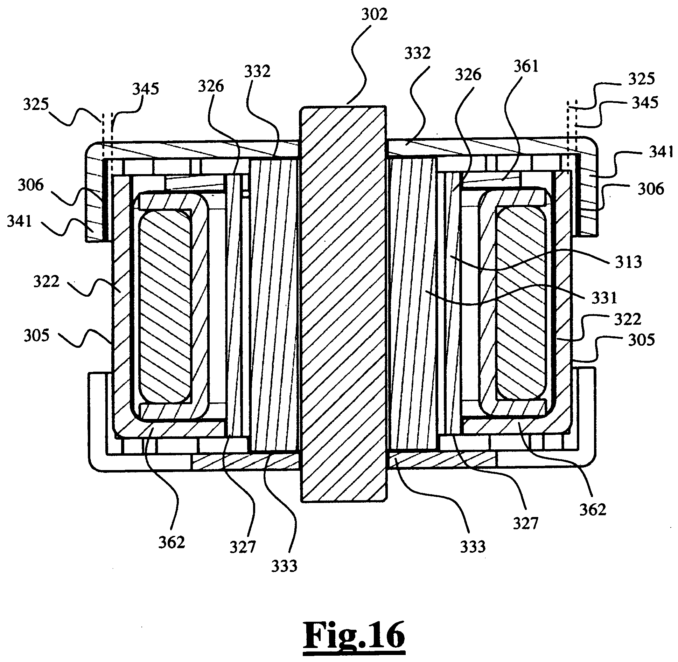

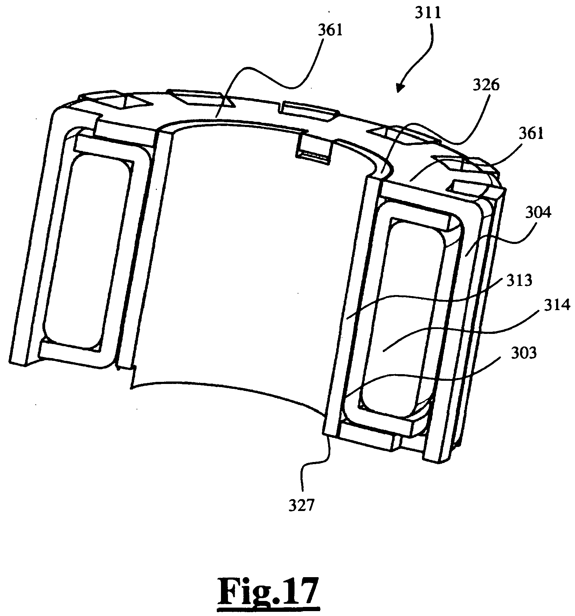

Dans le troisième mode de réalisation représenté sur les figures 13 à 18, la première pièce principale 311 est statique et constitue donc le stator, alors que la seconde pièce principale 312 est mobile et constitue donc le rotor. Comme dans le second mode de réalisation, le rotor 312 et sa surface d'entrefer sont disposés autour du stator 311. Cependant, comme dans le premier mode de réalisation, le rotor 312 comporte un axe d'entrainement 302 disposé à l'intérieur du stator 311. Le stator 311 et le rotor 312 sont donc montés de façon coaxiale autour de cet axe d'entrainement 302.

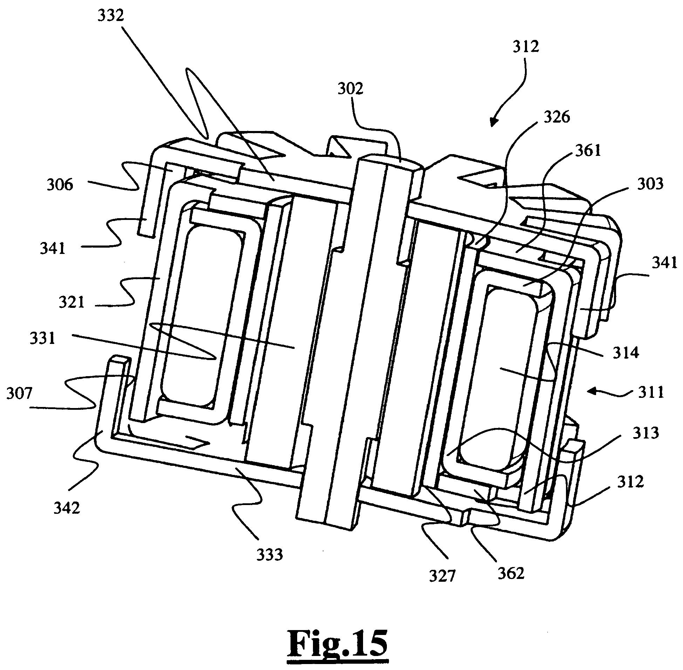

Comme cela est visible sur les figures 15 à 17, le stator 311 comprend une pièce intermédiaire 313 en matériau ferromagnétique qui présente la forme d'un cylindre creux. Le stator 311 comprend également une bobine d'excitation 314 montée sur un support de bobine 303. Le stator 311 comprend, en outre, des griffes 321, 322 en matériau ferromagnétique fixées solidairement sur la pièce intermédiaire 313. Plus précisément, les griffes 321 orientées vers le bas sont solidaires d'une pièce annulaire 361 qui est elle-même montée sur la circonférence à proximité du bord supérieur 326 de la pièce intermédiaire 313. Les griffes 322 orientées vers le haut sont, quant à elles, solidaires d'une pièce annulaire 362 qui est elle-même montée sur la circonférence à proximité du bord inférieur 327 de la pièce intermédiaire 313. Les griffes 321, 322 sont réparties le long de la circonférence respectivement des pièces annulaires 361, 362 de manière à s'entrecroiser sur une partie de la bobine d'excitation 314. Plus précisément, les griffes 321, 322 sont réparties le long de la circonférence des pièces annulaires en étant disposées alternativement sur l'une et l'autre desdites pièces annulaires 361, 362 avec un pas de griffes constant. Les griffes 321, 322 sont également alternativement orientées dans un sens opposé selon une direction axiale. Ainsi les griffes 321 réparties le long de la circonférence de la pièce annulaire 361 sont orientées vers le bas, alors que les griffes 322 réparties le long de la circonférence de la pièce annulaire 362 sont orientées vers le haut. Les griffes 321, 322 présentent une forme en « L ». Une première surface d'entrefer 325 du stator 311 présentant une forme sensiblement cylindrique est formée par le flanc axial externe 304, 305 des griffes 321, 322.

Le rotor 312 visible sur les figures 13, 14, 15 et 16 comprend un aimant permanent 331 polarisé dans un seul sens, une pièce latérale supérieure 332 et une pièce latérale inférieure 333 montés de façon sensiblement coaxiale par rapport à l'axe d'entrainement 302.

L'aimant permanent 331 présente une symétrie de révolution par rapport à l'axe d'entrainement 302. Plus précisément, l'aimant permanent 331 présente une forme cylindrique et comporte deux faces 334, 335 présentant une aimantation de signe opposé et constituant les pôles dudit aimant. Les deux pièces latérales 332, 333 sont fabriquées dans un matériau ferromagnétique et sont fixées solidairement sur chacune des faces 332, 333 de l'aimant. Elles présentent ainsi des polarités ayant des signes opposées. Les pièces latérales 332, 333 présentent également une symétrie de révolution par rapport à l'axe d'entrainement 302. Les protubérances 341, 342 sont réparties le long de la circonférence des pièces latérales et disposées alternativement sur l'une et l'autre desdites pièces latérales avec un pas de protubérances sensiblement identique au pas de griffes. Les protubérances 341, 342 présentent une forme en « L » dont les branches d'extrémité sont orientées axialement. Les flancs intérieurs 306, 307 des branches d'extrémités des protubérances 341, 342 forment une seconde surface d'entrefer 345 cylindrique. Les faces des flancs intérieurs 306, 307 des branches d'extrémité des protubérances 341, 342 et les faces des flancs axiaux externes 204, 205 des griffes 321, 322 formant les surfaces d'entrefer 325, 345 peuvent être planes. Avantageusement, elles peuvent être légèrement incurvées selon une courbure suivant la circonférence afin de minimiser toute variation de la distance d'entrefer le long de la circonférence du stator et du rotor.

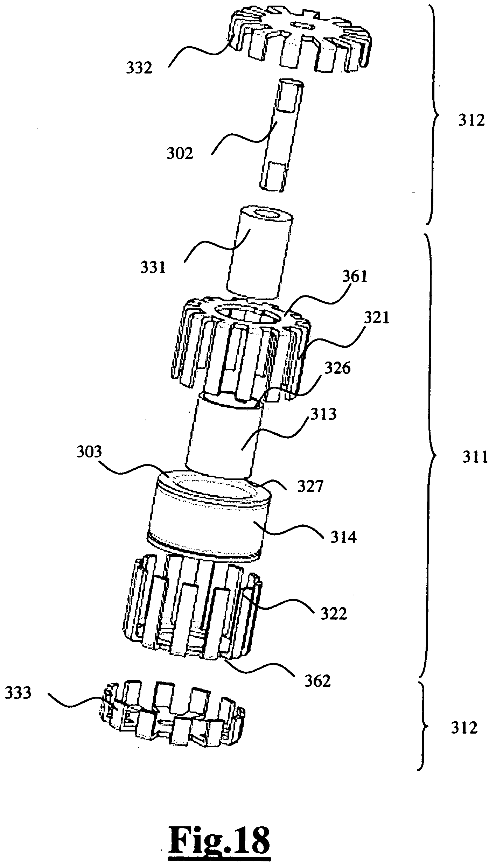

Comme cela est visible sur la figure 18, la pièce intermédiaire 313 du stator 311 comporte une partie cylindrique. Les griffes 321 orientées vers le bas sont solidaires de la pièce annulaire 361 et les griffes 322 orientés vers le haut sont solidaires de l'autre pièce annulaire 362. Lors de l'assemblage d'une machine tournante selon le troisième mode de réalisation, les pièces annulaires support de griffes 361, 362 viennent s'appuyer sur les bords 326, 327 de la partie cylindrique de la pièce intermédiaire 313. Ce type de disposition dans laquelle les griffes orientées dans un même sens sont disposées sur une même pièce annulaire permet de faciliter l'assemblage de la machine tournante. Comme dans le second mode de réalisation, les griffes 321, 322 solidaires d'une même pièce annulaire 361, 362 sont logées à l'extérieur de la partie cylindrique de la pièce intermédiaire 313. Lors de l'assemblage de la machine tournante, la bobine d'excitation 314 et le support de bobine 303 sont ainsi enfilés sur la pièce intermédiaire 313 pour être disposés entre les griffes 321, 322 et la pièce intermédiaire 313. Cette première partie de l'assemblage permet de former le stator 311. Les éléments du rotor 312, c'est à dire l'aimant 331, les parties latérales 332, 333 et l'axe d'entrainement 302, sont assemblés pour être insérés dans le stator 311 de façon coaxiale.

Le dispositif selon ce troisième mode de réalisation intègre les avantages des deux premiers modes de réalisations. Il est compact, efficace, et totalement réversible. Il peut être utilisé comme moteur, par exemple un moteur d'essuie glace, ou comme générateur d'énergie pour dispositif autonome, par exemple un interrupteur et sans fils, rotatif ou à bascule. La source potentielle d'énergie représentée par l'aimant 331 se trouve au centre du dispositif, de sorte toutes les fuites magnétiques soient récupérées par les pièces ferromagnétiques 332, 361, 362, 333 et contribuent à la génération d'énergie. Les dents du rotor se trouvent à la périphérie du dispositif, de sorte que les vitesses de rotations nécessaires à la génération d'énergie soient réduites. Ainsi le dispositif peut être couplé avec un système à plus faible vitesse que le dispositif selon le premier mode de réalisation.

Comme cela a été décrit précédemment, la machine tournante selon l'invention peut être donc être un moteur ou un générateur. Elle convient particulièrement au fonctionnement en tant que générateur.

La machine tournante selon l'invention permet d'obtenir une inversion du flux magnétique à chaque rotation correspondant à un pas polaire, c'est-à-dire à un pas de griffes ou à un pas de protubérances. Lorsque la machine tournante est utilisée comme un générateur, cette inversion du flux magnétique à chaque pas polaire permet d'optimiser les variations de flux dans le temps, et donc de maximiser l'énergie électrique produite.

La machine tournante selon l'invention, permet également de faciliter la fabrication de la partie d'aimantation permanente par rapport à des machines tournantes de l'art antérieur pour lesquels la partie d'aimantation permanente comporte une succession d'aimants permanents présentant des polarités de signe opposé, qui par nature ont tendance à se repousser entre eux. Cet avantage est d'autant plus important que la pièce à réaliser est de petite taille.

La machine tournante selon l'invention est particulièrement adaptée à la génération d'énergie par rotation du rotor par rapport au stator sur une partie de révolution. Dans ce mode de fonctionnement, il est possible de générer une énergie électrique pouvant aller de 500 à 600 micro-joules pour une rotation d'un pas polaire du rotor.

L'utilisation d'un aimant polarisé dans un seul sens, c'est-à-dire d'un aimant présentant deux pôles sur deux faces opposées, font que la machine tournante selon l'invention convient aux installations de petite taille. L'invention est en particulier adaptée à la construction de générateur d'énergie pour tout dispositif de commande, tel qu'un interrupteur.

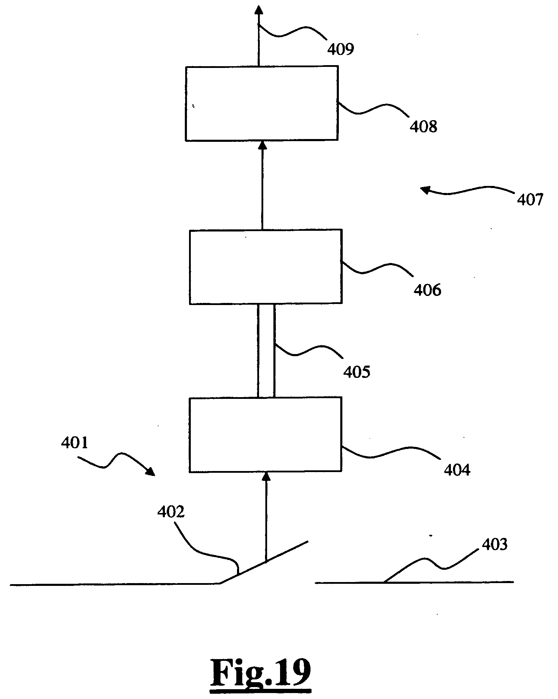

En référence à la figure 19, un tel interrupteur 401 comporte un organe de commande 402 agissant sur des moyens de contact pour établir ou interrompre la circulation d'un courant électrique dans un conducteur 403. Un tel interrupteur comporte également des moyens de couplage mécanique 404 pour transformer le mouvement de basculement de l'organe de commande en mouvement de rotation d'un axe d'entraînement 405. Cet axe est couplé au rotor 406 d'un générateur de tension 407 selon l'un des modes de réalisation décrit précédemment. Le stator 408 de ce générateur est quant à lui, solidaire du bâti de l'interrupteur et comporte une sortie électrique 409.

## Revendications

1. Machine tournante à flux transverse comprenant deux pièces principales (11, 12 ; 111, 112 ; 211, 212 ; 311, 312) montées de façon sensiblement coaxiale autour d'un axe principal (102 ; 201 ; 302), lesdites pièces principales étant constituées essentiellement par un stator et par un rotor monté rotatif par rapport au stator,
- la première pièce principale (11 ; 111 ; 211 ; 311) comprenant au moins une bobine d'excitation (14 ; 114 ; 214 ; 314), une pièce intermédiaire (13 ; 113 ; 213 ; 313) perméable magnétiquement et des griffes (21-24 ; 121, 122 ; 221, 222 ; 321, 322) réparties le long de la circonférence de ladite pièce intermédiaire avec un pas de griffes (P) constant et alternativement orientées dans un sens opposé, lesdites griffes formant une première surface d'entrefer (25 ; 125 ; 225 ; 325), lesdites griffes étant disposées de manière à former avec ladite pièce intermédiaire une pluralité de circuits magnétiques (26) autour d'une partie de ladite bobine,
- la seconde pièce principale (12 ; 112 ; 212 ; 312) comprenant une seconde surface d'entrefer (45 ; 145 ; 245 ; 345) permettant de fermer lesdits circuits magnétiques formés dans la première pièce principale par l'entremise de la première surface d'entrefer, et une partie d'aimantation permanente (31 ; 131 ; 231 ; 331) présentant une polarisation dans un seul sens,
**caractérisé en ce que** lesdites griffes sont disposées de manière à s'entrecroiser entre elles, la seconde pièce principale comportant des protubérances (41-44 ; 141, 142 ; 241, 242 ; 341, 342) portant la seconde surface d'entrefer, lesdites protubérances étant solidaires de la dite partie d'aimantation permanente de façon à présenter des polarités opposées, lesdites protubérances de polarités opposées étant alternativement réparties le long de la circonférence de ladite seconde pièce principale avec un pas de protubérances sensiblement identique au pas de griffes.

2. Machine tournante selon la revendication 1, **caractérisée en ce que** la première pièce principale (111 ; 211 ; 311) est un stator et la seconde pièce principale (112 ; 212 ; 312) est un rotor

3. Machine tournante selon l'une des revendications 1 ou 2, **caractérisée en ce que** la pièce intermédiaire (13 ; 113 ; 213 ; 313) comporte une partie cylindrique (15 ; 113 ; 213 ; 313).

4. Machine tournante selon la revendication 3, **caractérisée en ce que** les griffes (21-24 ; 121, 122 ; 221, 222 ; 321,322) orientées dans un sens donné sont solidaires d'une pièce annulaire (161, 162 ; 261, 262 ; 361, 362) disposée sur un bord de la partie cylindrique de la pièce intermédiaire.

5. Machine tournante selon la revendication 4, **caractérisée en ce que** les griffes (121, 122) solidaires d'une même pièce annulaire (161, 162) sont logées à l'intérieur de la partie cylindrique (113).

6. Machine tournante selon la revendication 4, **caractérisée en ce que** les griffes (221, 222 ; 321, 322) solidaires d'une même pièce annulaire (261, 262 ; 361, 362) sont à l'extérieur de la partie cylindrique (213 ; 313).

7. Machine tournante selon l'une des revendications 1 à 6, **caractérisée en ce que** la partie d'aimantation permanente (31 ; 131 ; 231 ; 331) est en une seule pièce.

8. Machine tournante selon la revendication 7, **caractérisée en ce que** la partie d'aimantation permanente (31 ; 131 ; 231 ; 331) est cylindrique.

9. Machine tournante selon l'une des revendications 1 à 8, **caractérisée en ce que** la seconde pièce principale comporte deux pièces latérales (32, 33 ; 132, 133 ; 232, 233 ; 332, 333), perméables magnétiquement, montées de façon sensiblement coaxiale par rapport à l'axe principal, lesdites pièces latérales étant solidaires de la partie d'aimantation permanente (31 ; 131 ; 231 ; 331) de façon à présenter des polarités opposées, les protubérances (41-44 ; 141, 142 ; 241, 242 ; 341, 342) de même polarité étant disposées sur l'une ou l'autre pièces latérales et réparties le long de la circonférence desdites pièces latérales.

10. Machine tournante selon la revendication 9, **caractérisée en ce que** les pièces latérales (232, 233 ; 332, 333) sont des pièces annulaires disposées sur la circonférence ou sur les bords de la partie d'aimantation permanente (231 ; 331).

11. Machine tournante selon l'une des revendications 1 à 10, **caractérisée en ce que** les protubérances sont des dents (41-44 ; 141, 142 ; 241, 242) dont les faces d'extrémités forment la seconde surface d'entrefer.

12. Machine tournante selon l'une des revendications 1 à 10, **caractérisée en ce que** les protubérances (341, 342) présentent une forme en « L » dont les branches d'extrémité sont orientées axialement.

13. Machine tournante selon l'une des revendications 1 à 12, **caractérisée en ce que** la première pièce principale (111 ; 311) est disposée autour de la seconde pièce principale (112 ; 312).

14. Machine tournante selon l'une des revendications 1 à 12, **caractérisée en ce que** la seconde pièce principale (212) est disposée autour de la première pièce principale (211).

15. Dispositif de commutation comportant un organe de commande et une machine tournante utilisée comme générateur d'énergie, ladite machine tournante comportant un rotor, **caractérisé en ce que** la machine tournante est selon l'une des revendications 1 à 14, le rotor étant couplé mécaniquement à l'organe de commande.

## Patentansprüche

1. Drehende Transversalfluss-Maschine, die zwei Hauptteile (11, 12; 111, 112; 211, 212; 311, 312) umfasst, die im Wesentlichen koaxial um eine Hauptachse (102; 201; 302) montiert sind, wobei die Hauptteile im Wesentlichen durch einen Stator und durch einen Rotor, der in Bezug auf den Stator drehbar montiert ist, gebildet sind,
- wobei das erste Hauptteil (11; 111; 211; 311) wenigstens eine Erregungsspule (14; 114; 214; 314), ein magnetisch permeables Zwischenteil (13; 113; 213; 313) und Klauen (21-24; 121, 122; 221, 222; 321, 322), die längs des Umfangs des Zwischenteils mit einer konstanten Klauenschrittweite (P) verteilt sind und abwechselnd in entgegengesetzter Richtung orientiert sind, umfasst, wobei die Klauen eine erste Luftspaltoberfläche (25; 125; 225; 325) bilden, wobei die Klauen in der Weise angeordnet sind, dass sie mit dem Zwischenteil mehrere Magnetkreise (26) um einen Teil der Spule bilden,
- wobei das zweite Hauptteil (12; 112; 212; 312) eine zweite Luftspaltoberfläche (45; 145; 245; 345) aufweist, die ermöglicht, die in dem ersten Hauptteil gebildeten Magnetkreise durch die Anordnung der ersten Luftspaltoberfläche dazwischen zu schließen, und ein Permanentmagnetisierungsteil (31; 131; 231; 331) umfasst, das eine Polarisation in einer einzigen Richtung aufweist,
**dadurch gekennzeichnet, dass** die Klauen in der Weise angeordnet sind, dass sie miteinander verschränkt sind, wobei das zweite Hauptteil Vorsprünge (41-44; 141, 142; 241, 242; 341, 342), die die zweite Luftspaltoberfläche tragen, umfasst, wobei die Vorsprünge mit dem Permanentmagnetisierungsteil fest verbunden sind, derart, dass sie entgegengesetzte Polaritäten haben, wobei die Vorsprünge mit entgegengesetzten Polaritäten längs des Umfangs des zweiten Hauptteils abwechselnd verteilt sind, wobei eine Schrittweite der Vorsprünge im Wesentlichen mit der Schrittweite der Klauen übereinstimmt.

2. Drehende Maschine nach Anspruch 1, **dadurch gekennzeichnet, dass** das erste Hauptteil (111; 211; 311) ein Stator ist und das zweite Hauptteil (112; 212; 312) ein Rotor ist.

3. Drehende Maschine nach einem der Ansprüche 1 oder 2, **dadurch gekennzeichnet, dass** das Zwischenteil (13; 113; 213; 313) einen zylindrischen Teil (15; 113; 213; 313) umfasst.

4. Drehende Maschine nach Anspruch 3, **dadurch gekennzeichnet, dass** die Klauen (21-24; 121, 122; 221, 222; 321, 322), die in einer gegebenen Richtung orientiert sind, mit einem ringförmigen Teil (161, 162; 261, 262; 361, 362), das an einem Rand des zylindrischen Teils des Zwischenteils angeordnet ist, fest verbunden sind.

5. Drehende Maschine nach Anspruch 4, **dadurch gekennzeichnet, dass** die Klauen (121, 122), die mit demselben ringförmigen Teil (161, 162) fest verbunden sind, in dem zylindrischen Teil (113) aufgenommen sind.

6. Drehende Maschine nach Anspruch 4, **dadurch gekennzeichnet, dass** sich die Klauen (221, 222; 321, 322), die mit demselben ringförmigen Teil (261, 262; 361, 362) fest verbunden sind, außerhalb des zylindrischen Teils (213; 313) befinden.

7. Drehende Maschine nach einem der Ansprüche 1 bis 6, **dadurch gekennzeichnet, dass** das Permanentmagnetisierungsteil (31; 131; 231; 331) einteilig ausgebildet ist.

8. Drehende Maschine nach Anspruch 7, **dadurch gekennzeichnet, dass** das Permanentmagnetisierungsteil (31; 131; 231; 331) zylindrisch ist.

9. Drehende Maschine nach einem der Ansprüche 1 bis 8, **dadurch gekennzeichnet, dass** das zweite Hauptteil zwei magnetisch permeable seitliche Teile (32, 33; 132, 133; 232, 233; 332, 333) aufweist, die im Wesentlichen koaxial in Bezug auf die Hauptachse montiert sind, wobei die seitlichen Teile mit dem Permanentmagnetisierungsteil (31; 131; 231; 331) fest verbunden sind, derart, dass sie entgegengesetzte Polaritäten aufweisen, wobei die Vorsprünge (41-44; 141, 142; 241, 242; 341, 342) mit gleicher Polarität an dem einen oder dem anderen seitlichen Teil angeordnet sind und längs des Umfangs der seitlichen Teile verteilt sind.

10. Drehende Maschine nach Anspruch 9, **dadurch gekennzeichnet, dass** die seitlichen Teile (232, 233; 332, 333) ringförmige Teile sind, die am Umfang oder an den Rändern des Permanentmagnetisierungsteils (231; 331) angeordnet sind.

11. Drehende Maschine nach einem der Ansprüche 1 bis 10, **dadurch gekennzeichnet, dass** die Vorsprünge Zähne (41-44; 141, 142; 241, 242) sind, deren Stirnflächen die zweite Luftspaltoberfläche bilden.

12. Drehende Maschine nach einem der Ansprüche 1 bis 10, **dadurch gekennzeichnet, dass** die Vorsprünge (341, 342) die Form eines "L" aufweisen, dessen Endschenkel axial orientiert sind.

13. Drehende Maschine nach einem der Ansprüche 1 bis 12, **dadurch gekennzeichnet, dass** das erste Hauptteil (111; 311) um das zweite Hauptteil (112; 312) angeordnet ist.

14. Drehende Maschine nach einem der Ansprüche 1 bis 12, **dadurch gekennzeichnet, dass** das zweite Hauptteil (212) um das erste Hauptteil (211) angeordnet ist.

15. Kommutationsvorrichtung, die ein Steuerorgan und eine drehende Maschine, die als Energiegenerator verwendet wird, umfasst, wobei die drehende Maschine einen Rotor aufweist, **dadurch gekennzeichnet, dass** die drehende Maschine wie in einem der Ansprüche 1 bis 14 angegeben beschaffen ist, wobei der Rotor mit dem Steuerorgan mechanisch gekoppelt ist.

## Claims

1. Transverse flux rotary machine comprising two main parts (11, 12; 111, 112; 211, 212; 311, 312) mounted substantially coaxially about a main shaft (102; 201; 302), said main parts consisting essentially of a stator and a rotor rotatably mounted relative to the stator,
- the first main part (11; 111; 211; 311) comprising at least one energization coil (14; 114; 214; 314), an intermediate part (13; 113; 213; 313) that is magnetically permeable and fingers (21-24; 121, 122; 221, 222; 321, 322) arranged along the circumference of said intermediate part at a constant finger pitch (P) and alternately oriented in opposite directions, said fingers forming a first air gap surface (25; 125; 225; 325), said fingers being disposed to form with said intermediate part a plurality of magnetic circuits (26) around a portion of said coil,
- the second main part (12; 112; 212; 312) comprising a second air gap surface (45; 145; 245; 345) for closing said magnetic circuits formed in the first main part by intervention of the first air gap surface, and a permanent magnetization portion (31; 131; 231; 331) that is unidirectionally polarized,
**characterized in that** said fingers are disposed to interlace, the second main part including protruberances (41-44; 141, 142; 241, 242; 341, 342) carrying the second air gap surface, said protruberances being fastened to said permanent magnetization portion so as to have opposite polarities, said opposite polarity protruberances being alternately arranged along the circumference of said second main part with a protruberance pitch substantially identical to the finger pitch.

2. Rotary machine according to claim 1, **characterized in that** the first main part (111; 211; 311) is a stator and the second main part (112; 212; 312) is a rotor.

3. Rotary machine according to either of claims 1 or 2, **characterized in that** the intermediate part (13; 113; 213; 313) has a cylindrical portion (15; 113; 213; 313).

4. Rotary machine according to claim 3, **characterized in that** the fingers (21-24; 121, 122; 221, 222; 321, 322) oriented in a given direction are fastened to an annular part (161, 162; 261, 262; 361, 362) disposed on an edge of the cylindrical portion of the intermediate part.

5. Rotary machine according to claim 4, **characterized in that** the fingers (121, 122) fastened to the same annular part (161, 162) are inside the cylindrical part (113).

6. Rotary machine according to claim 4, **characterized in that** the fingers (221, 222; 321, 322) fastened to the same annular part (261, 262; 361, 362) are outside the cylindrical portion (213; 313).

7. Rotary machine according to any of claims 1 to 6, **characterized in that** the permanent magnetization part (31; 131; 231; 331) is in one piece.

8. Rotary machine according to claim 7, **characterized in that** the permanent magnetization part (31; 131; 231; 331) is cylindrical.

9. Rotary machine according to any of claims 1 to 8, **characterized in that** the second main part includes two magnetically permeable lateral parts (32, 33; 132, 133; 232, 233; 332, 333) mounted substantially coaxially relative to the main shaft, said lateral parts being fastened to the permanent magnetization part (31; 131; 231; 331) so as to have opposite polarities, the protruberances (41-44; 141, 142; 241, 242; 341, 342) of the same polarity being disposed on one or the other of the lateral parts and arranged along the circumference of said lateral parts.

10. Rotary machine according to claim 9, **characterized in that** the lateral parts (232, 233; 332, 333) are annular parts disposed on the circumference or on the edges of the permanent magnetization portion (231; 331).

11. Rotary machine according to any of claims 1 to 10, **characterized in that** the protruberances are teeth (41-44; 141, 142; 241, 242) the end faces of which form the second air gap surface.

12. Rotary machine according to any of claims 1 to 10, **characterized in that** the protruberances (341, 342) are L-shaped with the end branches oriented axially.

13. Rotary machine according to any of claims 1 to 12, **characterized in that** the first main part (111; 311) is disposed around the second main part (112; 312).

14. Rotating machine according to any of claims 1 to 12, **characterized in that** the second main part (212) is disposed around the first main part (211).

15. Switching device including a control member and a rotary machine used as an energy generator, said rotary machine including a rotor, **characterized in that** the rotary machine is a machine according to any of claims 1 to 14, the rotor being mechanically coupled to the control member.
